# EUROPÄISCHE PATENTSCHRIFT

(11) **EP 1 612 025 B1**
(45) Veröffentlichungstag und Bekanntmachung des Hinweises auf die Patenterteilung: **26.05.2010**
(21) Anmeldenummer: 05009206.3
(22) Anmeldetag: 27.04.2005
(51) Int. Cl.: B29C 45/27, B29C 45/30

(54) **Einspritzdüse zur Führung von Schmelzemasse in einer Kunststoffspritzgiessform**
Injection nozzle for guiding melt in a plastic injection mould
Buse d'injection pour guider une matière fondue dans un moule d'injection de matière plastique

(30) Priorität: 02.07.2004 DE 102004032336
(43) Veröffentlichungstag der Anmeldung: 04.01.2006
(73) Patentinhaber: HASCO Hasenclever GmbH + Co KG, 58513 Lüdenscheid (DE)
(72) Erfinder: Reinl, Horst, 72793 Pfullingen (DE)
(74) Vertreter: Ostriga, Sonnet, Wirths & Roche

(56) Entgegenhaltungen:
- EP-A- 0 382 257
- EP-A- 0 620 096
- DE-A1- 10 255 938
- DE-A1- 10 307 989
- US-A1- 2002 098 262

## Beschreibung

Die Erfindung betrifft eine Einspritzdüse zur Führung von Schmelzemasse in einer Kunststoffspritzgießform od. dgl., entsprechend dem Patentanspruch 1.

Eine solche Einspritzdüse ist beispielsweise durch die DE 694 03 513 T2 (vgl. Fig. 3) bekannt.

Bei unkritischen Schmelzen, insbesondere bei nicht korrosiven und den Verschleiß nicht fördernden Schmelzen, kann ein Torpedo-Einsatz aus Kupferberyllium (CuBe) bestehen, zumal Kupferberyllium über eine sehr gute Wärmeleitfähigkeit verfügt und ein solcher Torpedo-Einsatz in der Lage ist, die über den Heizkörper und die Schmelze eingeleitete Wärme möglichst bis in die Torpedospitze hinein, d.h. möglichst weit zum Anspritzpunkt hin, zu transportieren.

Wenn indessen verschleißfördernde Schmelzen, beispielsweise mit Glasfaserzusatz, eingesetzt werden, versagt ein solcher Torpedo-Einsatz, weil Kupferberyllium sehr verschleißanfällig ist. Ähnliches gilt bezüglich der Korrosionsanfälligkeit von Kupferberyllium, wenn z.B. bei Einsatz von flammgeschützten Kunststoffen austretende Gase Korrosion hervorrufen. Außerdem ist die Temperaturbelastbarkeit von Kupferberyllium nicht immer ausreichend, weil bei ca. 380 °C eine Aushärtung einsetzt.

Mit dem Einsatz verschleißfördernder Schmelzen einhergehende Nachteile sind bei dem Torpedo-Einsatz gemäß der DE 694 03 513 T2 in einem gewissen Maße berücksichtigt. Der bekannte Torpedo-Einsatz weist einen zentralen Schaft mit einem spitz zulaufenden vorderen Ende, der Torpedospitze also, auf, welche sich bezüglich der Fließrichtung der Schmelze stromabwärts hinter einem äußeren Kragen erstreckt. Stromaufwärts bzw. rückwärtig ist der zentrale Schaft mit einem gerundeten Ende versehen, welches sich rückwärts hinter dem äußeren Kragen erstreckt. Der zentrale Schaft weist innen einen Kern auf, welcher von einem Außenmantel umgeben ist. Der innere Kern besteht aus einem thermisch hochleitfähigen Material, wie z.B. aus Silber oder aus Kupfer. Der Außenmantel hingegen besteht aus einem abnutzungsbeständigen und korrosionsbeständigen Material, wie z.B. aus Schnellstahl.

Der Vorteil der von der DE 694 03 513 T2 bekannten Torpedo-Spitze besteht darin, dass der aus thermisch hochleitendem Material gefertigte Kern den vorbeschriebenen Wärmetransport in die Spitze hinein gestattet, während der aus Stahl bestehende Außenmantel, welcher indessen eine geringere Wärmeleitfähigkeit besitzt, den verschleißanfälligen Kern vor der aggressiven Schmelze schützt.

Ausgehend von der Einspritzdüse gemäß der DE 694 03 513 T2, liegt der Erfindung die Aufgabe zugrunde, die bekannte Einspritzdüse derart zu verbessern, dass deren Torpedo-Einsatz bei hinreichender Unempfindlichkeit gegen aggressive Schmelzen eine verbesserte Wärmeübertragungsfähigkeit und gegebenenfalls eine herstellungsgünstige Bauform ermöglicht.

Diese Aufgabe wird entsprechend der Gesamtheit der Merkmale des Anspruchs 1 gelöst.

Wichtig ist vor allen Dingen, dass der Hohlraum zur Aufnahme der Metall-Einlage aus hochwärmeleitfähigem Metall zur Schmelzemasse hin partiell offen ist, so dass das hochwärmeleitfähige Metall unmittelbar bzw. im wesentlichen unmittelbar dem insbesondere durch die Schmelzemasse vermittelten Wärmestrom ausgesetzt ist, was zu einer erheblichen Verbesserung des Wärmetransports in die Torpedospitze hinein führt.

Die Erfindung nimmt daher gegebenenfalls bewusst eine partielle Freilegung der hochwärmeleitfähigen Metall-Einlage zur Verbesserung des Wärmetransports bei einer nur partiellen Beeinträchtigung durch die Schmelzemasse, eben nur bezüglich des freigelegten Bereichs, in Kauf.

In weiterer Ausgestaltung der Erfindung bildet der Torpedo-Einsatz an seiner der Torpedo-Spitze abgewandten Seite einen bundartig vorspringenden Ansatz mit einem einen Teil des Schmelzekanals darstellenden etwa becherförmigen Hohlraum, dessen Becherboden von mindestens einem zum ringförmigen Schmelzekanal führenden Schmelzedurchlass und von der Öffnung durchsetzt ist, die zu dem Hohlraum zur Aufnahme der Metall-Einlage führt.

Dadurch, dass der becherförmige Hohlraum einen Teil des Schmelzekanals bildet, ergibt sich zusätzlich ein den Wärmeübergang bzw. den Wärmedurchgang verbessernder großflächiger Kontakt mit der Schmelze und dem beheizten Düsenkern, zumal dann, wenn der becherförmige Hohlraum eine relativ große axiale Länge aufweist.

Zweckmäßig ist der Hohlraum zur Aufnahme der Metall-Einlage über die zur letzteren führende Öffnung an den becherförmigen Hohlraum angeschlossen.

Ein fertigungstechnisch einfacher Torpedo-Einsatz ist entsprechenden weiteren Erfindungsmerkmalen dadurch möglich geworden, dass der becherförmige Hohlraum zylindrisch ist und sich koaxial zu dem ebenfalls zylindrischen Hohlraum zur Aufnahme der Metall-Einlage erstreckt. Die ineinander übergehenden Hohlräume bilden so eine einfach herzustellende Stufenbohrung. Die Montage der Metall-Einlage kann dabei durch den becherförmigen Hohlraum hindurch erfolgen.

Eine andere Ausführungsform entsprechend der Erfindung, die einen effektiven Wärmedurchgang bzw. Wärmeübergang gestattet, besteht darin, dass der zum ringförmigen Schmelzekanal führende Schmelzedurchlass die Metall-Einlage anschneidet oder durchdringt.

Die Metall-Einlage selbst besteht zweckmäßig aus Cu, aus einer Cu-Legierung, z.B. aus CuBe, oder aus einem Werkstoff, welcher ähnlich wie Cu oder wie CuBe hochwärmeleitfähig ist. Die gewünschte Abriebfestigkeit kann erfindungsgemäß dadurch erzielt werden, dass der Torpedo-Einsatz aus abriebfestem und nach Möglichkeit auch korrosionsfestem Stahl gefertigt ist. Auch der Düsenkern kann gegebenenfalls aus Stahl gefertigt sein. Auch besteht die Möglichkeit, lediglich ein an den becherförmigen Hohlraum angeschlossenes Schmelzeführungsrohr aus verschleiß- und korrosionsfestem Stahl anzuwenden, während der vom Schmelzestrom abgeschirmte Düsenkern selbst aus einem hochwärmeleitfähigem Werkstoff, wie z.B. aus CuBe, bestehen kann.

Die andere vorteilhafte erfindungsgemäße Ausführungsform ist dadurch gekennzeichnet, dass zumindest eine zur Metall-Einlage führende Öffnung die Montage-Öffnung für die Metall-Einlage bildet. Insbesondere für den bereits geschilderten Fall, dass der Hohlraum zur Aufnahme der Metall-Einlage über die zur letzteren führende Öffnung an den becherförmigen Hohlraum angeschlossen ist, ergibt sich in vorerwähnter Weise - zumal im Vergleich zum Gegenstand der DE 694 03 513 T2 - eine erheblich vereinfachte Montage der Metall-Einlage.

Die Abrieb- und Korrosionsfestigkeit der Gesamtanordnung kann im übrigen dadurch verbessert werden, dass die Metall-Einlage zumindest im Bereich der zur Schmelzemasse führenden Öffnung chemisch vernickelt ist. Eine dünne Schicht aus chemisch Nickel ist zumindest extrem abriebresistent und beeinträchtigt den Wärmeübergang bzw. Wärmedurchgang zur Metall-Einlage kaum.

Weitere Erfindungsmerkmale ergeben sich aus zusätzlichen Unteransprüchen.

In den Zeichnungen ist eine bevorzugte Ausführungsform entsprechend der Erfindung näher dargestellt, es zeigt
Fig. 1 einen Axialschnitt durch eine Einspritzdüse und
Fig. 2 einen Axialschnitt durch einen in Alleinstellung gezeigten Torpedo-Einsatz.

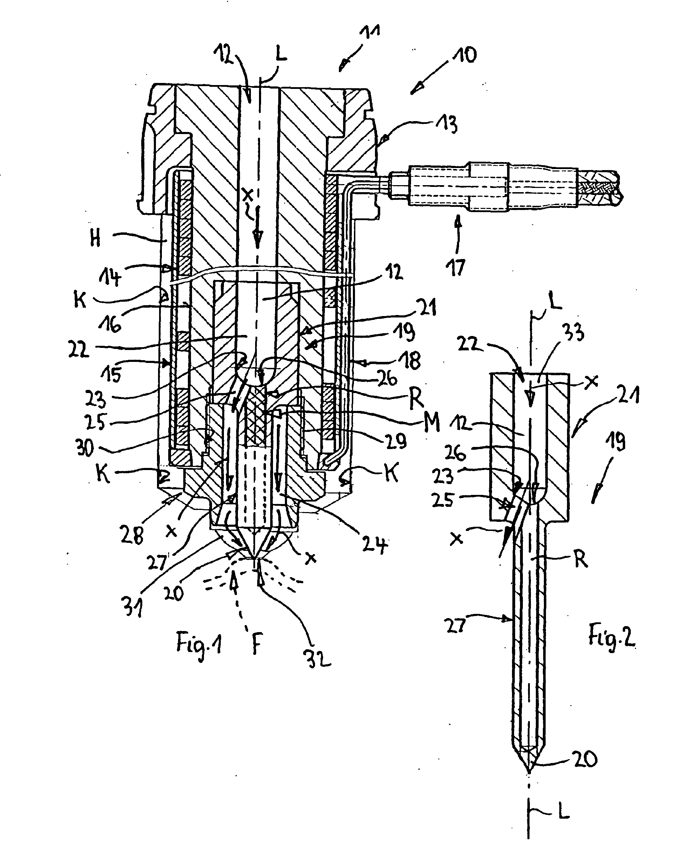

Eine Einspritzdüse zur Führung einer Kunststoff-Schmelzemasse ist in Fig. 1 mit 10 bezeichnet. Beim gezeigten Ausführungsbeispiel handelt es sich um eine gehäuselose Einspritzdüse, deren hauptsächliches Bauteil von einem Düsenkern 11 gebildet ist, der einen zentralen Schmelzekanal 12 umgibt.

Die jeweilige Fließrichtung des Schmelzestroms ist mit x bezeichnet, während die Längsmittelachse das Bezugszeichen L trägt.

Der Düsenkern 11 trägt bezüglich der Fließrichtung x stromaufwärts bzw. rückseitig einen Einbauadapter 13 zur werkzeugseitigen Montage.

Außen ist der Düsenkern 11 von einem gewendelten Rohrheizkörper 14 umgeben, welcher mittels einer rohrförmigen Hülse 15 eng gegen die kreiszylindrische Außenmantelfläche 16 des Düsenkörpers 11 gehalten wird.

Der Rohrheizkörper 14 wird über eine Kabeleinspeisung 17 und über elektrische Leitungen 18 mit elektrischer Energie versorgt.

Die Konturbegrenzung der formplattenseitigen Aufnahmehöhlung H ist durchgehend mit K bezeichnet.

Etwa bis zur halben Länge des Düsenkerns 11 in letzteren entgegen der Fließrichtung x hineinragend, ist ein Torpedo-Einsatz 19 zentral innerhalb des Düsenkerns 11 angeordnet. Der Torpedo-Einsatz 19 ist ebenso wie der Düsenkern 11 im wesentlichen rotationssymmetrisch ausgebildet. Der Torpedo-Einsatz 19 weist an seiner einer Torpedo-Spitze 20 abgewandten Seite einen bundartig vorspringenden Ansatz 21 auf, welcher zentral einen becherförmigen Hohlraum 22 bildet, der eine Verlängerung des Schmelzekanals 12 darstellt.

Der Becherboden 23 des becherförmigen Hohlraums 22 ist zum einen von einem zu einem ringförmigen Schmelzekanal 24 führenden Schmelzedurchlass 25 zum anderen von einer Öffnung 26 durchsetzt, die zu einem Hohlraum R zur Aufnahme einer etwa stabförmigen Metall-Einlage M kreiszylindrischen Querschnitts führt.

Die Metall-Einlage M besteht aus Cu und sitzt fest innerhalb des Hohlraums R, welcher koaxial innerhalb des Torpedo-Schafts 27 kreisförmigen Querschnitts angeordnet ist. Der Torpedo-Schaft 27 ist von dem ringförmigen Schmelzekanal 24 umgeben.

Die Außenbegrenzung des ringförmigen Schmelzekanals 24 wird von einem Nippel 28 gebildet, welcher zur besseren Wärmeisolierung aus Titan bestehen kann. Der Nippel 28 weist ein Außengewinde 29 auf, welches mit einem Innengewinde 30 des Düsenkerns 11 kooperiert. Auf diese Weise kann der Nippel 28, den bundförmigen Ansatz 21 untergreifend, den Torpedo-Einsatz 19 in seiner Einbauposition lösbar fixieren.

Die Metall-Einlage M ist in ihrem dem Schmelzekanal 12 zugänglichen Bereich, d.h. im Bereich des Schmelzedurchlasses 25 und der Öffnung 26, mit einer im einzelnen nicht dargestellten dünnen hochabriebfesten Schutzbeschichtung aus chemisch Nickel versehen. Die Dicke dieser Schutzbeschichtung beträgt nur etwa 0,01 mm. Dabei kann es zweckmäßig und vorteilhaft sein, die gesamte Oberfläche des Torpedo-Einsatzes 19 mit einer Beschichtung aus chemisch Nickel zu versehen.

Entsprechend der Fließrichtung x fließt die Schmelze zunächst durch den oberen Bereich des Schmelzekanals 12, sodann durch den die Fortsetzung des Schmelzekanals 12 bildenden becherförmigen Hohlraum 22, trifft dabei im Bereich des Schmelzedurchlasses 25 und der Öffnung 26 auf die Metall-Einlage M, setzt ihren Weg durch den ringförmigen Schmelzekanal 24 hindurch fort und gelangt schließlich über einen von der Kontur K bildeten düsenartigen Hohlraum 31 und über eine Einspritzöffnung 32 in die lediglich teilweise und mit Strichlinien angedeutete artikelbildende Formhöhlung F.

Der Düsenkern 11 und Torpedo-Einsatz 19 bestehen aus abriebfestem und gegebenenfalls auch korrosionsfestem Stahl.

Es ist vorstellbar, dass mittels der Metall-Einlage M, welche der Kunststoffschmelze im Bereich des Schmelzedurchlasses 25 und der Öffnung 26 im wesentlichen unmittelbar ausgesetzt ist, ein guter Wärmetransport bis in die Torpedo-Spitze 20 hinein erfolgen kann.

Fig. 2 zeigt den Torpedo-Einsatz 19 ohne Metall-Einlage M. Anhand von Fig. 2 ist indessen vorstellbar, dass der Metall-Einsatz M in nicht dargestellter Weise einfach durch die stromaufwärts liegende Öffnung 33 des bundartigen Ansatzes 21 und den becherförmigen Hohlraum 22 hindurch montiert werden kann, indem beispielsweise eine aus Cu bestehende, im wesentlichen rundstabförmige Metall-Einlage M in den Raum R eingeschoben bzw. eingepresst wird.

Infolge des verhältnismäßig großen Wärmeausdehnungskoeffizienten von Cu der Metall-Einlage M sowie infolge des im Vergleich dazu wesentlich geringeren Wärmeausdehnungskoeffizienten des aus Stahl bestehenden Torpedo-Einsatzes 19 ergibt sich bei Erwärmung der Anordnung ohnehin ein fester Sitz der Metall-Einlage M innerhalb des Hohlraumes R.

## Patentansprüche

1. Einspritzdüse (10) zur Führung von Schmelzemasse in einer Kunststoffspritzgießform, mit einem einen Schmelzekanal (12) umgebenden Düsenkern (11), welcher an seiner Außenmantelfläche (16) eine Heizvorrichtung (14) und welcher an seinem bezüglich des Schmelzestroms (x) stromabwärts gelegenen vorderen Ende mindestens einen der Formhöhlung (F) einer Werkzeugform benachbarten Torpedo-Einsatz (19) trägt, der aus abriebfestem Werkstoff gebildet ist und der, mit seinem Torpedo-Schaft (27) und mit seiner Torpedo-Spitze (20) zur Formhöhlung (F) weisend, innerhalb eines mindestens mittelbar von der Innenmantelfläche des Düsenkerns (11) begrenzten ringförmigen Schmelzekanals (24) frei vorragt, wobei der Torpedo-Schaft (27) einen bis in die Torpedo-Spitze (20) hineinreichenden, mit einer Metall-Einlage (M) aus hochwärmeleitfähigem Metall gefüllten Hohlraum (R) aufweist, **dadurch gekennzeichnet, dass** der Hohlraum (R) mindestens eine zur der Schmelzemasse hin führende Öffnung (26) aufweist, derart, dass die Metall-Einlage (M) an den Schmelzekanal (12) anrandet.

2. Einspritzdüse nach Anspruch 1, **dadurch gekennzeichnet, dass** der Torpedo-Einsatz (19) an seiner der Torpedo-Spitze (20) abgewandten Seite einen bundartig vorspringenden Ansatz (21) aufweist, der einen etwa becherförmigen Hohlraum (22) bildet, der einen Teil des Schmelzekanals (12) darstellt, wobei der Becherboden (23) des Hohlraums (22) von mindestens einem zum ringförmigen Schmelzekanal (24) führenden Schmelzedurchlass (25) und von der Öffnung (26) durchsetzt ist, die zu dem Hohlraum (R) führt, welcher zur Aufnahme der Metall-Einlage (M) dient.

3. Einspritzdüse nach Anspruch 2, **dadurch gekennzeichnet, dass** der Hohlraum (R) zur Aufnahme der Metall-Einlage (M) über die zur letzteren führenden Öffnung (26) an den becherförmigen Hohlraum (22) angeschlossen ist.

4. Einspritzdüse nach Anspruch 2 oder nach Anspruch 3, **dadurch gekennzeichnet, dass** der becherförmige Hohlraum (22) zylindrisch ist und sich koaxial zu dem ebenfalls zylindrischen Hohlraum (R) zur Aufnahme der Metall-Einlage (M) erstreckt.

5. Einspritzdüse nach einem der Ansprüche 2 bis 4, **dadurch gekennzeichnet, dass** der zum ringförmigen Schmelzekanal (24) führende Schmelzedurchlass (25) die Metall-Einlage (M) anschneidet oder durchdringt.

6. Einspritzdüse nach einem der Ansprüche 1 bis 5, **dadurch gekennzeichnet, dass** die Metall-Einlage (M) aus Cu, der Torpedo-Einsatz (19) aus Stahl und der Düsenkern (11) gegebenenfalls auch aus Stahl besteht.

7. Einspritzdüse nach einem der Ansprüche 1 bis 6, **dadurch gekennzeichnet, dass** die Metall-Einlage (M) einen in den Hohlraum (R) eingesetzten starren Metallstift bildet.

8. Einspritzdüse nach einem der Ansprüche 1 bis 6, **dadurch gekennzeichnet, dass** die Metall-Einlage (M) aus eingepresstem und gegebenenfalls gesintertem Metallpulver oder aus einer Knetlegierung besteht.

9. Einspritzdüse nach einem der Ansprüche 1 bis 8, **dadurch gekennzeichnet, dass** die zumindest eine zur Metall-Einlage (M) führende Öffnung (26) die Montage-Öffnung für die Metall-Einlage (M) bildet.

10. Einspritzdüse nach einem der Ansprüche 1 bis 9, **dadurch gekennzeichnet, dass** die Metall-Einlage (M) zumindest im Bereich der zur Schmelzemasse führenden Öffnung (26) chemisch vernickelt ist.

11. Einspritzdüse nach einem der Ansprüche 1 bis 10, **gekennzeichnet durch** einen mit mehreren Torpedo-Einsätzen (19) versehenen Düsenkern (11), dem für jeden Torpedo-Einsatz (19) jeweils ein zur Formhöhlung weisender Düsenauslauf (31) zugeordnet ist.

12. Einspritzdüse nach einem der Ansprüche 1 bis 9, **dadurch gekennzeichnet, dass** der Torpedo-Einsatz (19) einen mehrere Torpedo-Schäfte (27) mit Torpedo-Spitzen (20) aufweisenden bundartig vorspringenden, den etwa becherförmigen Hohlraum (22) bildenden Ansatz (21) aufweist, und dass dem Torpedo-Einsatz (19) für jede Torpedo-Spitze (20) ein zur Formhöhlung (F) weisender Düsenauslauf (31) zugeordnet ist.

## Claims

1. An injection nozzle (10) for guiding a molten mass in a plastic injection mould, having a nozzle core (11) surrounding a melt channel (12), which nozzle core supports a heating device (14) on its outer lateral surface (16) and at least one torpedo insert (19), adjacent to the mould cavity (F) of a moulding tool, at its front end situated downstream with respect to the melt flow (x), which torpedo insert is formed from an abrasion-resistant material and, with its torpedo shaft (27) and with its torpedo tip (20) pointing to the mould cavity (F), projects freely within an annular melt channel (24) delimited at least indirectly by the inner lateral surface of the nozzle core (11), wherein the torpedo shaft (27) has a cavity (R) which extends into the torpedo tip (20) and is filled with a metal inlay (M) of heat-conductive metal, **characterised in that** the cavity (R) has at least one opening (26) leading to the molten mass in such a way that the metal inlay (M) extends to the melt channel (12).

2. An injection nozzle according to Claim 1, **characterised in that** the torpedo insert (19) has, on its side remote from the torpedo tip (20), a projection (21) which protrudes in the manner of a collar and forms an approximately bowl-shaped cavity (22) representing part of the melt channel (12), wherein at least one melt passage (25), leading to the annular melt channel (24), and the opening (26) pass through the bowl-base of the cavity (22), said opening leading to the cavity (R) which serves to receive the metal inlay (M).

3. An injection nozzle according to Claim 2, **characterised in that** the cavity (R) for receiving the metal inlay (M) is connected to the bowl-shaped cavity (22) by way of the opening (26) leading to the metal inlay.

4. An injection nozzle according to Claim 2 or Claim 3, **characterised in that** the bowl-shaped cavity (22) is cylindrical and extends coaxially to the likewise cylindrical cavity (R) for receiving the metal inlay (M).

5. An injection nozzle according to one of Claims 2 to 4, **characterised in that** the melt passage (25) leading to the annular melt channel (24) truncates or penetrates the metal inlay (M).

6. An injection nozzle according to one of Claims 1 to 5, **characterised in that** the metal inlay (M) is made from Cu, the torpedo insert (19) is made from steel and the nozzle core (11) is likewise made from steel.

7. An injection nozzle according to one of Claims 1 to 6, **characterised in that** the metal inlay (M) forms a rigid metal pin inserted into the cavity (R).

8. An injection nozzle according to one of Claims 1 to 6, **characterised in that** the metal inlay (M) is composed of a pressed and possibly sintered metal powder or a wrought alloy.

9. An injection nozzle according to one of Claims 1 to 8, **characterised in that** the at least one opening (26) leading to the metal inlay (M) forms the assembly opening for the metal inlay (M).

10. An injection nozzle according to one of Claims 1 to 9, **characterised in that** the metal inlay (M) is chemically nickel-plated, at least in the region of the opening (26) leading to the molten mass.

11. An injection nozzle according to one of Claims 1 to 10, **characterised by** a nozzle core (11) which is provided with a plurality of torpedo inserts (19) and with which a respective nozzle outlet (31) pointing towards the mould cavity is associated for each torpedo insert (19).

12. An injection nozzle according to one of Claims 1 to 9, **characterised in that** the torpedo insert (19) has a projection (21) which forms the approximately bowl-shaped cavity (22), protrudes in the manner of a collar and has a plurality of torpedo shafts (27) with torpedo tips (20), and **in that** a nozzle outlet (31) pointing towards the mould cavity (F) is associated with the torpedo insert (19) for each torpedo tip (20).

## Revendications

1. Buse d'injection (10), pour guider une masse fondue dans un moule de moulage par injection de matière plastique, avec un noyau de buse (11) entourant un canal à masse fondue (12), noyau de buse portant, sur sa surface d'enveloppe extérieure (16) un dispositif de chauffage (14) et portant, à son extrémité avant, disposée en aval par rapport à l'écoulement de masse fondue (x), au moins un insert de torpille (19), voisin de la cavité de moulage (F) d'un moule à outil, insert de torpille fabriqué en un matériau résistant à l'usure et, en étant tourné vers la cavité de moule (F), par sa tige de torpille (27) et par sa pointe de torpille (20), faisant saillie librement à l'intérieur d'un au moins un canal à masse fondue (24) en forme d'anneau, délimité indirectement par la surface d'enveloppe intérieure du noyau de buse (11), la tige de torpille (27) présentant un espace creux (R), rempli d'un insert métallique (M), composé d'un métal hautement conducteur de la chaleur, allant jusque dans la pointe de torpille (20), **caractérisée en ce que** l'espace creux (R) présente au moins une ouverture (26) menant à la masse fondue, de manière que l'insert métallique (M) arrive en bordure du canal à masse fondue (12).

2. Buse d'injection selon la revendication 1, **caractérisée en ce que**, sur sa face opposée à la pointe de torpille (20), l'insert de torpille (19) présente un appendice (21) en saillie à la manière d'une collerette, formant un espace creux (22) à peu près en forme de godet, constituant une partie du canal à masse fondue (12), le fond de godet (23) de l'espace creux (22) étant traversé par au moins un passage à masse fondue (25), menant au canal à masse fondue (24) en forme d'anneau, et par l'ouverture (26) menant à l'espace creux (R), servant à recevoir l'insert métallique (M).

3. Buse d'injection selon la revendication 2, **caractérisée en ce que** l'espace creux (R), servant à recevoir l'insert métallique (M), est raccordé à l'espace creux (22) en forme de godet, par l'intermédiaire de l'ouverture (26) menant à ce dernier espace creux.

4. Buse d'injection selon la revendication 2 ou selon la revendication 3, **caractérisée en ce que** l'espace creux (22) en forme de godet est cylindrique et s'étend coaxialement par rapport à l'espace creux (R), également cylindrique, servant à recevoir l'insert métallique (M).

5. Buse d'injection selon l'une des revendications 2 à 4, **caractérisée en ce que** le passage à masse fondue (25), menant au canal à masse fondue (24) en forme d'anneau, coupe ou traverse l'insert métallique (M).

6. Buse d'injection selon l'une des revendications 1 à 5, **caractérisée en ce que** l'insert métallique (M) est composé en Cu, l'insert de torpille (19) en acier et le noyau de buse (11) le cas échéant également en acier.

7. Buse d'injection selon l'une des revendications 1 à 6, **caractérisée en ce que** l'insert métallique (M) forme une tige métallique rigide, insérée dans l'espace creux (R).

8. Buse d'injection selon l'une des revendications 1 à 6, **caractérisée en ce que** l'insert métallique (M) est composé de poudre métallique pressée et, le cas échéant, frittée, ou d'un alliage forgeable.

9. Buse d'injection selon l'une des revendications 1 à 8, **caractérisée en ce que** la au moins une ouverture (26) menant à l'insert métallique (M) forme l'ouverture de montage pour l'insert métallique (M).

10. Buse d'injection selon l'une des revendications 1 à 9, **caractérisée en ce que** l'insert métallique (M) est nickelé chimiquement, au moins dans la zone de l'ouverture (26) menant à la masse fondue.

11. Buse d'injection selon l'une des revendications 1 à 10, **caractérisée par** un noyau de buse (11), muni de plusieurs inserts de torpille (19), auquel est chaque fois associée, pour chaque insert de torpille (19), une sortie de buse (31) tournée vers la cavité de moulage.

12. Buse d'injection selon l'une quelconque des revendications 1 à 9, **caractérisée en ce que** l'insert de torpille (19) présente un appendice (21) faisant saillie en forme de collerette, présentant plusieurs tiges de torpille (27) avec des pointes de torpille (20), l'appendice (21) formant l'espace creux (22) à peu près en forme de godet, et **en ce qu'**une sortie de buse (31), tournée vers la cavité de moulage (F), est associée à l'insert de torpille (19) pour chaque pointe de torpille (20).
